# EUROPEAN PATENT APPLICATION

(11) **EP 2 112 125 A1**
(43) Date of publication of application: **28.10.2009**
(21) Application number: 07850782.9
(22) Date of filing: 18.12.2007
(51) Int. Cl.: C02F 1/469, B01D 61/44, B01D 61/48, C02F 1/28, C02F 1/42, H01M 8/06

(54) **METHOD AND APPARATUS FOR PRODUCING PURE WATER**

(30) Priority: 27.12.2006 JP 2006351564; 27.12.2006 JP 2006351565
(71) Applicant: Kurita Water Industries Ltd., Shinjuku-ku, Tokyo 160-8383 (JP)
(72) Inventor: MISUMI, Yoshiteru, Tokyo 160-8383 (JP); OSAWA, Masanobu, Tokyo 160-8383 (JP); SATO, Shigeaki, Tokyo 160-8383 (JP); IIZUKA, Hiroshi, Tokyo 160-8383 (JP)
(74) Representative: Bertsch, Florian Oliver
(86) International application number: PCT/JP2007/074294
(87) International publication number: WO 2008/078602

(57) **Abstract**

Pure water production by electric deionization and pure water production by ion exchange are performed by using an electric deionization apparatus. A pure water producing apparatus is provided with an electric deionization apparatus wherein a concentration/cathode chamber (35), a desalting chamber (37) and an anode side concentration chamber (40) are provided by arranging ion exchanging membranes (33', 34, 33) between an anode (32) and a cathode (31), and each chamber is filled with an ion exchange resin. Water to be treated is supplied into the concentration chamber (40) in a state where Power distribution is controlled to be stopped or to be at a current density of 1,000mA/dm² or less, and ions are exchanged by the ion exchange resin (38. 39) in the concentration chamber (40), and pure water is permitted to flow out from the concentration chamber.

## Description

### [Field of the Invention]

The present invention relates to an apparatus for producing deionized (demineralized) water. More particularly, the present invention relates to the deionized water producing apparatus suitable for a fuel cell system having an electrodeionization apparatus wherein condensation of steam generated by power generation and steam in combustion gas from a reformer is recovered and recycled as a steam resource for steam reforming. The present invention relates to a method for producing deionized water using the apparatus for producing deionized water.

### [Background of the Invention]

A fuel cell system is provided with a reformer which reforms raw fuel gas, such as town gas, LP gas, and methanol to a hydrogen rich gas and a fuel cell body which generates electricity by using as fuel the reformed gas obtained from the reformer.

The reformed gas generated by the reformer is usually consumed in a fuel cell according to a load and a hydrogen consuming rate of the fuel cell, and gas containing excessive hydrogen is led to the reformer as off-gas (exhaust gas), and it is burnt by a burner to generate refining energy.

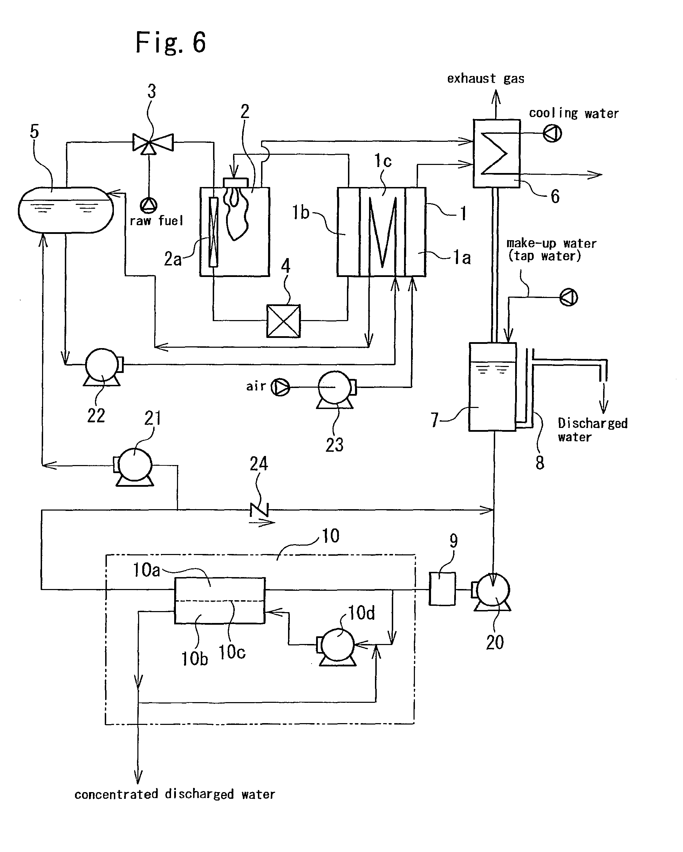

Fig. 6 is a fundamental diagram of a water treating apparatus in a phosphoric acid fuel cell system described as a prior art in JP2001-176535A.

A fuel cell body 1 is provided with a unit cell consisting of a fuel electrode 1b and an air electrode 1a, and cooling plates 1c each of which has a cooling tube and is allocated at every two or more unit cells.

A reformer 2 produces reformed hydrogen-rich gas by heating raw fuel gas such as natural gas supplied through a raw-fuel supply system, with steam which is separated by a steam separator 5 and supplied through a steam supply system. Reforming reaction proceeds on a catalyst layer of a catalyst bed 2a by being heated by combustion heat generated by offgas combustion in a burner.

The reformed gas generated by the reformer 2 is supplied to the fuel electrode 1b of the fuel cell body 1 via the reformed gas supply system which has a CO transformer 4. The off-gas containing hydrogen which flows out of the fuel electrode 1b, and which did not contribute to a cell reaction is supplied to the burner of the reformer 2 as fuel through an off-gas supply system.

A blower for combustion air supply which is not illustrated is connected to the burner of the reformer 2. The combustion gas flown out from the reformer 2 is sent to a condenser 6 for water recovery, and is discharged after water recovery. Recovered water is sent to a recovered water tank 7.

An air supply system is connected to the fuel cell body 1. The system has a blower 23 which supplies air to the air electrode 1a, and an air discharging system which supplies air containing steam after a cell reaction to the condenser 6 for recovering water.

A cooling water circulating system having the steam separator 5 and a cooling water circulating pump 22 is connected to the condenser tube of the cold plate 1c of the fuel cell body 1 for circulating cooling water at the time of power generation of the fuel cell body 1.

In the steam separator 5, the two-phase flow of the water and the steam which is discharged from the condenser tube of the fuel cell body 1 is separated to steam and cooling water. The steam separated here is sent out so that it is mixed with the raw fuel for the reformer 2. The raw fuel having low pressure is mixed with the aid of an ejector pump 3. The ejector pump 3 uses a steam as a driving fluid and raw fuel as a driven fluid. The raw fuel supply system is usually provided with a desulfurizer which is not illustrated.

As mentioned above, deionized water is needed for steam reforming. In a phosphoric acid fuel cell, pressured deionized water is usually used as cooling water of a fuel cell. The deionized water for the cooling water is low in concentration of foreign matters of minerals such as silica and has low electrical conductivity.

Although refrigerants other than water may be used for cooling of a fuel cell, since deionized water is consumed as steam for steam refining in a reformer, deionized water is necessary to be supplied continuously. Therefore, steam in an air off-gas from a fuel cell and a combustion gas of a reformer is usually recovered as water by a condenser, and the recovered water is deionized by a deionization (demineralization) device.

In case an ionic exchange type water deionization device is used as the water deionization device, when conductivity of the deionized water exceeds 0.5-1 µS/cm, the water deionization device is needed to be exchanged at intervals of about 2000 h-3000 h of generating duration of time and an ion exchange resin in the water deionization device is necessary to be exchanged, which is troublesome and requires resin reproduction cost.

Accordingly, in Fig. 6, an electrodeionization apparatus 10 requiring no exchange of resin is employed instead of the ionic exchange type water deionization device.

The principal part of this electrodeionization apparatus 10 is separated into a desalting chamber 10a and an concentrating chamber 10b by an ion-exchange membrane 10c. Anions and cations in recovered water introduced via a pump 20 from the recovered water tank 7 gather in the concentrating chamber 10b by permeating an anion exchange membrane and a cation exchange membrane, respectively, and they are discharged out from a system as concentrated discharging water. As a result, in the outlet side of the desalting chamber 10a, demineralized water is generated continuously and it is sent to the steam separator 5 with the feed pump 21.

Treated water (deionized water) is recycled to a suction side of the pump 20 in order to correspond to change of supplying amount of the deionized water while maintaining a water feeding rate to the desalting chamber.

A check valve 24 provided in the circulating system prevents the recovered water in the tank 7 from being fed to the steam separator 5 directly via the feed pump 21 without passing the electrodeionization apparatus 10.

An amount of concentrated discharging water is as small as one the third as that of the water fed to the desalting chamber. And so, a concentrated water circulating pump 10d is provided at a concentrating line in order to recycle concentrated water like as in a desalting line whereby securing a discharging rate of concentrated water while securing a flow rate of water to the concentration chamber.

In Fig.6, a mineral removing device 9 is provided at an inlet side of the electrodeionization apparatus 10. Since the electrodeionization apparatus 10 employs ion-exchange membranes, scaling substance in water introduced to the electrodeionization apparatus needs to be low in its concentration. For example, silica concentration therein is required to be several ppm or less, so that the mineral removing device 9 is used for removing scaling substances.

Fig.2 of JP2001-176535A discloses that an ionic exchange type deionization device is provided in parallel with the electrodeionization apparatus, wherein when the water quality of deionized water from the electrodeionization apparatus has deteriorated, water is led to the ionic exchange type deionization device in order to avoid deterioration of water quality.

By the way, JP2004-82092A in the name of the applicant discloses an electrodeionization apparatus which is capable of treating water by membrane separation fully by feeding sufficient electric current, even when a low voltage is applied between electrodes thereof.
Patent documents 1 :JP2001-176535A
Patent documents 2 :JP2004-82092A

When treating the recovered water from the fuel cell system with the electrodeionization apparatus as shown in the above Fig.6, and supplying it to the fuel cell, at a start of the fuel cell system, there is no exhaust water from the fuel cell system, and deionized water is not supplied. When an ionic exchange type deionization device is provided in parallel with the electrodeionization apparatus as mentioned above, it is possible to supply deionized water to the fuel cell system with the ionic exchange type deionization device. However, in this case, both of the electrodeionization apparatus and the ionic exchange type deionization device are required, so that equipment becomes large-scale, and cost thereof also increases.

### [Summary of the Invention]

An object of the present invention is to produce deionized water by electrodeionization and by ionic exchange with using an electrodeionization apparatus.

A deionized water producing apparatus according to a first aspect has an electrodeionization apparatus having: a cathode; an anode; ion exchange membranes arranged between the cathode and the anode; a concentrating compartment at the side of the cathode, a desalting compartment, and a concentrating compartment at the side of the anode formed by arranging the membranes between the cathode and the anode; and an ion exchanger filled in each compartment, wherein the electrodeionization apparatus further has means for conducting an operation mode for producing deionized water by ion exchange by which water to be treated is fed to at least one of the concentrating compartment and the desalting compartment, the water is treated by ion-exchange, and deionized water flows out from the compartment.

A deionized water producing apparatus according to a second aspect is **characterized in that** the means for conducting the operation mode for producing deionized water by ion exchange has energization control means for stopping applying current or adjusting a current density to 1000 mA/dm² or less, in the first aspect.

A deionized water producing apparatus according to a third aspect is **characterized in that,** in the first or second aspect, the electrodeionization apparatus further has a first cation exchange membrane, an anion exchange membrane, and a second cation exchange membrane arranged between the cathode and the anode in this order from the cathode to the anode; wherein the concentrating compartment at the side of the cathode is a concentration-cathode compartment which is formed between the cathode and the first cation exchange membrane; the desalting compartment is formed between the first cation exchange membrane and the anion exchange membrane; the concentrating compartment at the side of the anode is formed between the anion exchange membrane and the second cation exchange membrane; and an anode compartment is formed between the second cation exchange membrane and the anode.

A deionized water producing apparatus according to a fourth aspect is **characterized in that** water to be treated is fed to the concentrating compartment between the anion exchange membrane and the second cation exchange membrane at the operation mode for producing deionized water by ion exchange, in the third aspect.

A deionized water producing apparatus according to a fifth aspect is **characterized in that** water to be treated is fed to the concentration-cathode compartment, and then the water flown out from the concentration-cathode compartment is fed to the concentrating compartment between the anion exchange membrane and the second cation exchange membrane at the operation mode for producing deionized water by ion exchange, in the third aspect.

A deionized water producing apparatus according to a sixth aspect is **characterized in that** water to be treated is fed to the desalting compartment at the operation mode for producing deionized water by ion exchange, in the third aspect.

A deionized water producing apparatus according to a seventh aspect is **characterized in that** a mixed bed of anion exchange resin and cation exchange resin is filled in the concentrating compartments as an ion exchanger, in any one of the first to fifth aspects.

A deionized water producing apparatus according to a eighth aspect is **characterized in that** a cation exchanger and an anion exchanger are arranged alternately in this order from an upper stream side in the concentrating compartment, in any one of the first to fifth aspects.

A deionized water producing apparatus according to a ninth aspect is **characterized in that** a cation exchanger and an anion exchanger are arranged alternately in this order from an upper stream side in the desalting compartment, in the first aspect.

A method for producing deionized water according to a tenth aspect uses an electrodeionization apparatus having: a cathode; an anode; a concentrating compartment at the side of the cathode, a desalting compartment, a concentrating compartment at the side of the anode; and an ion exchanger filled in each compartment, each of the compartments being formed by arranging ion exchange membranes between the cathode and the anode; wherein deionized water producing operation by ion exchange is conducted by feeding water to be treated to at least one of the concentrating compartments and desalting compartment, bringing the water into contact with the ion exchanger in the compartment, and letting deionized water discharged from the compartment.

A method for producing deionized water according to a eleventh aspect is **characterized in that** the deionized water producing operation by ion exchange is conducted at a state where energization is controlled such that energization is stopped or a current density is 1000 mA/dm² or less, in the tenth aspect.

A method for producing deionized water according to a twelfth aspect is **characterized in that** the water to be treated is obtained by clarifying and then dechlorinating tap water, well water or industrial water, in the eleventh or twelfth aspect.

A method for producing deionized water according to a thirteenth aspect is **characterized in that** the electrodeionization apparatus is for deionizing recovered water of a fuel cell system, and that deionized water is produced by ion exchange with using the electrodeionization apparatus and deionized water thus produced is fed to the fuel cell system, in one of the tenth to twelfth aspects.

According to the deionized water producing apparatus of the first aspect, and the method for producing deionized water of the tenth aspect, deionized water is produced by ion exchange with using the ion exchanger filled in the electrodeionization apparatus. Deionized water produced by ion exchange can be obtained without arranging an ion exchange apparatus in addition to the electrodeionization apparatus.

Although cations and anions such as sodium ion and chlorine ion are accumulated in the ion exchanger in the electrodeionization apparatus during operation for ion exchange treatment, these ions are removed and the ion exchanger is regenerated when the electrodeionization apparatus is operated for electrodeionizing treatment thereafter.

Accoring to the deionized water producing apparatus of the second aspect and the deionized water producing method of the eleventh aspect, scale forming ions contained in the raw water is hard to be concentrated at a surface of the cathode or each membrane, so that scale formation on the surface of the cathode or each membrane is prevented.

The electrodeionization apparatus employed in the deionized water producing apparatus of the second to fourth aspects is that disclosed by the above JP 2004-82092A, and it is capable of producing fully deionized water even when a low voltage is applied between the electrodes.

In the electrodeionization apparatus, only one desalting compartment is provided, the concentrating compartment at the side of anode and the concentration-cathode compartment are arranged in both sides of the desalting compartment, and further, the cathode compartment is arranged adjacently to the concentrating compartment at the side of the anode, so that the distance between the electrodes is small and the voltage applied thereto is low.

In this electrodeionization apparatus, since the anode compartment is arranged separately from the concentrating compartment at the side of the anode compartment, and the compartments are separated from each other by the second cation exchange membrane, Cl- ion is prevented from migrating from the concentrating compartment at the side of the anode to the anode compartment. Therefore, Cl₂ is produced in the anode compartment only from Cl⁻ in the electrode water introduced into the anode compartment, so that an amount of Cl₂ produced in the anode compartment becomes very small. As a result, the conductive material such as cation exchange resin filled in the anode compartment and the second cation exchange membrane facing to the anode compartment are prevented from deterioration by Cl₂.

The concentrating compartment fed with water to be treated for producing deionized water by ion exchange treatment is preferably filled with a mixed bed of anion exchange resin and cation exchange resin, or filled with cation exchange resin and anion exchange resin in this order alternately from its upper stream. Advantages of alternate filling of resins are described later with reference to the drawings.

### [Brief Description of the Drawings]

Fig.1 is a distribution diagram showing the example of deionized water producing operation by the electric deionization of the electrodeionization apparatus having a four compartment structure.
Fig.2 is a distribution diagram showing another example of deionized water producing operation by the electric deionization of the electrodeionization apparatus of Fig.1.
Fig.3 is a distribution diagram showing the example of deionized water producing operation by the ion exchange using the electrodeionization apparatus of Fig.1.
Fig.4 is a distribution diagram showing another example of deionized water producing operation by the ion exchange using the electrodeionization apparatus of Fig.1.
Fig.5 is a distribution diagram showing another example of deionized water producing operation by the ion exchange using the electrodeionization apparatus of Fig.1.
Fig.6 is a distribution diagram of the fuel cell system according to prior art.
Fig.7 is a distribution diagram showing another example of deionized water producing operation by the electric deionization of the electrodeionization apparatus according to another embodiment.
Fig.8 is a distribution diagram showing another example of deionized water producing operation by the electric deionization of the electrodeionization apparatus of Fig.7.
Fig.9 is a distribution diagram showing another example of deionized water producing operation by the electric deionization of the electrodeionization apparatus of Fig.7.

### [Detailed description]

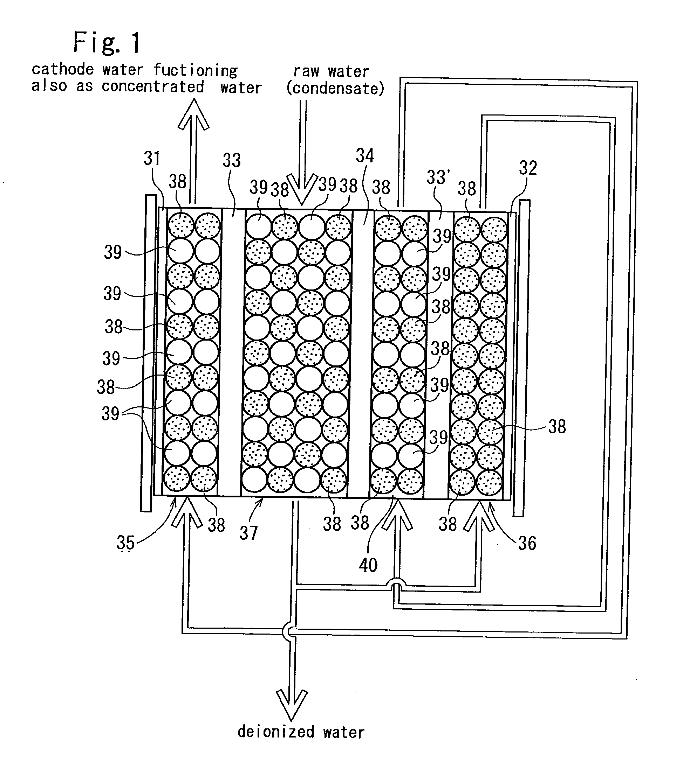

Hereafter, embodiments will be described with reference to drawings. Fig.1 is a vertical sectional view schematically showing an electrodeionization device according an embodiment.

A first cation exchange membrane 33, an anion exchange membrane 34, and a second cation exchange membrane 33' are arranged between a cathode 31 and an anode 32. A concentration-cathode compartment 35 functioning both as a concentrating compartment and a cathode compartment is formed between the cathode 31 and the first cation exchange membrane 33, and a desalting compartment 37 is formed between the first cation exchange membrane 33 and the anion exchange membrane 34. A concentrating compartment 40 is formed between the anion exchange membrane 34 and the second cation exchange membrane 33', and an anode compartment 36 is formed between the second cation exchange membrane 33' and the anode 32.

The concentration-cathode compartment 35, the concentrating compartment 40, and the anode compartment 36 are filled with an ion exchange resin. It should be noted that an anion exchange resin 39 and a cation exchange resin 38 are filled in a multi-layer type in the concentration-cathode compartment 35 and the concentrating compartment 40, but they may be filled in a type of a mixed bed. A cation exchange resin 38 is filled in the anode compartment 36. The desalting compartment 37 is filled with a mixed bed of the cation exchange resin 38 and the anion exchange resin 39, but the resins may be filled in a multi-layer type.

The desalting compartment 37 is provided at its one end with an inlet for raw water (condensed water) and is provided at its other end with an outlet for deionized water produced therein.

The anode compartment 36 is provided at its one end with an inlet for electrode water. In this embodiment, a part of deionized water discharged from the desalting compartment is separated therefrom, and is used as electrode water.

Water from the anode compartment 36 is sent to the concentrating compartment 40 through one end thereof and is discharged from the concentrating compartment 40 through the other end thereof. Water from the concentrating compartment 40 is sent to the concentration-cathode compartment 35 through one end thereof and is discharged, as cathode electrode water functioning also as concentrated water, from the concentration-cathode compartment 35 through the other end thereof.

A supply process of water to be treated (pretreated tap water) is preferable to be performed within a period of time as short as possible and to return to a normal operation process in order to raise deionized water supply efficiency. Therefore, the higher one of the flow rate to the concentrating compartment of water to be treated in a supply process is preferred, for example, more than SV20 [h⁻¹] is preferable. However, SV is preferable to be 20-100 [h⁻¹] since desalting of water to be treated becomes insufficient when SV exceeds 100 [h⁻¹].

The water flow direction to the concentrating compartment of water to be treated is preferably a downflow, when the ion-exchange resin in the concentrating compartment is not a single type but a mixed bed type or a multi-layer type. If the direction of water flow is upflow, there is a possibility that arrangement of the resin of a mixed bed type or a multi-layer type may collapse undesirably.

Piping with a valve is connected to an inlet and an outlet of each of compartments 35, 37, 40, and 36, and the water flow to each compartment is controlled by opening and closing of the valve, or channel change. An operating means of the deionized water producing apparatus is constituted by a control means of the valve and an energization control means. The operating means may be controlled either by manual operation or by a computer etc.

In the electrodeionization apparatus, since the electrical resistance at the time of energization becomes small by employing the multi-layer type of ion-exchange resin, deionizing efficiency can be improved and the apparatus can be compact. Therefore, the multi-layer type is more preferable than a mixed bed type. The multi-layer type preferably consists of pure anion resin layers and pure cation resin layers, but it may consist of anion rich layers and cation rich layers so far as a voltage applied between the electrodes does not go up too high.

In the case of the multi-layer type, water is preferable to become contact with the cation exchange resin prior to the anion exchange resin. Namely, the resins are arranged in the order of cation exchange resin → anion exchange resin → cation exchange resin → anion exchange resin from the upstream side. If the anion exchange resin is arranged at the uppermost stream, there is a possibility that OH ions generated in the ion exchange treatment mode of operation may react to the Mg ions contained in water to be treated, and Mg(OH)₂ scale may precipitate in the anion exchange resin.

Next, the mode of operation of this apparatus is explained.

### <Electrodeionization operating mode>

In one electrodeionization operating mode, raw water (condensed water)is fed into the desalting compartment 37 while a voltage is applied between the cathode 31 and the anode 32 and is taken out as deionized water. As mentioned above, a part of the deionized water is fed into the anode compartment 36 and is sent to the concentrating compartment 40 and the concentration-cathode compartment 35 sequentially. Cations in the raw water permeate the first cation exchange membrane 33 and are discharged in a state mixed with the cathode water. Anions in the raw water permeate the anion exchange membrane 34, migrate into the concentrating compartment 40, and are discharged through the concentration-cathode compartment 35 in a state mixed with the water from the concentrating compartment.

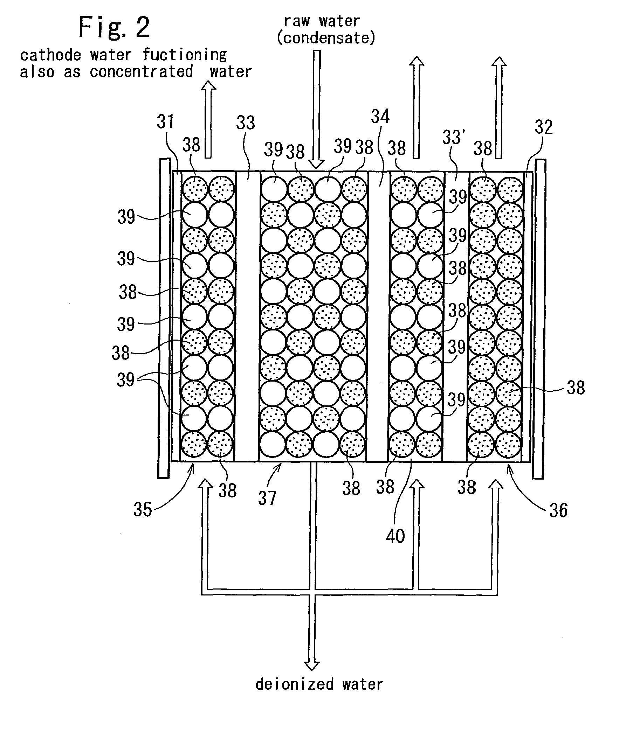

Another water flow mode of electrodeionization operation is illustrated in Fig.2.

In Fig.2, raw water (condensed water) is fed into the desalting compartment 37 while a voltage is applied between the cathode 31 and the anode 32. Deionized water from the desalting compartment is mainly taken out as deionized water, and a part of the deionized water is fed into the concentration-cathode compartment 35, the concentrating compartment 40, and the anode compartment 36 respectively.

### <Ion exchange operation mode>

Method for producing deionized water by ion exchange treatment using the electrodeionization apparatus is explained below.

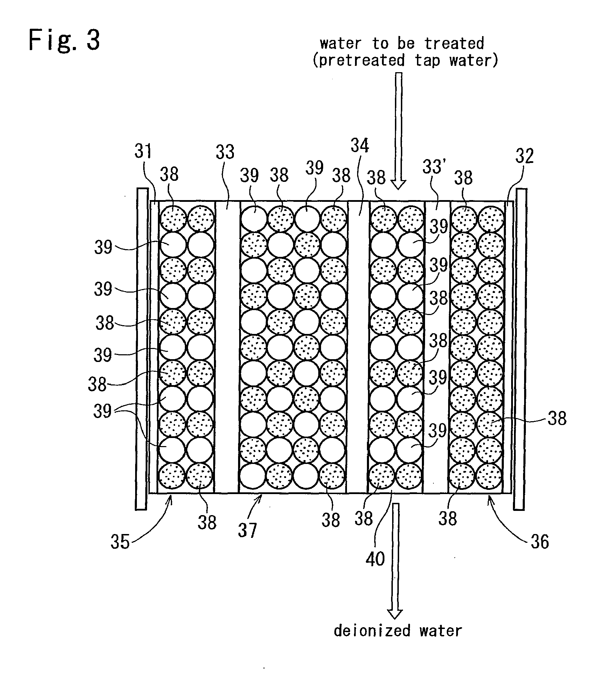

In this mode, an energizing amount is adjusted so that energization may be stopped or current density is equal to or less than 1000 mA/dm², and water is fed and flows as shown in Fig.3, 4, or 5. There is a possibility that scale generating ions condense on the surface of the cathode or the ion exchange membranes, and a scale may unpreferably precipitate on the surface of the cathode or the ion exchange membranes, when current density exceeds 1000 mA/dm². The current density is more preferably equal to or less than 600 mA/dm² for the same reason. Stopping energization is most preferable since it prevents scale formation more certainly and also control of an energizing amount becomes simple.

In Fig.3, water to be treated is fed to the concentrating compartment 40 in the side of the anode, and the water flown out of the compartment 40 is obtained as deionized water.

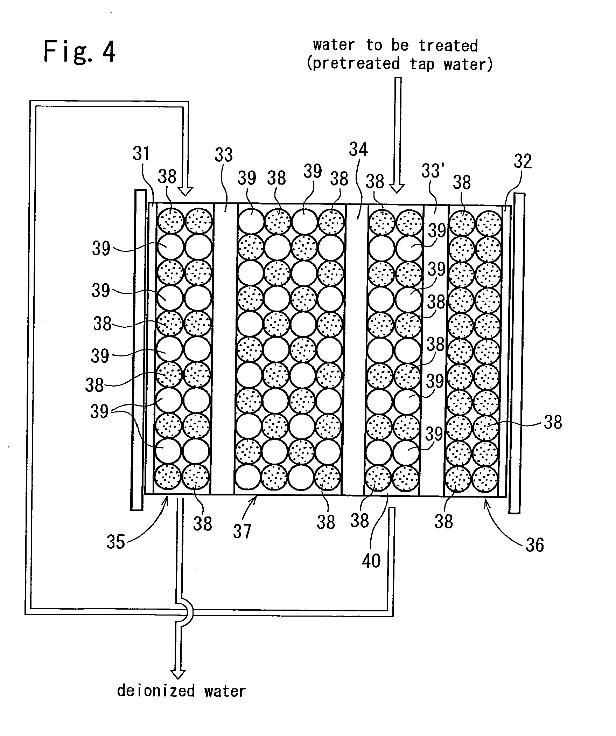

When deionized water of the high quality is required, water is fed and flows as shown in Fig.4. In Fig.4, water to be treated is fed to the concentrating compartment 40 in the side of the anode, the water flown out from the compartment 40 is fed to the concentration-cathode compartment 35, and the water flown out from the compartment 35 is obtained as deionized warter.

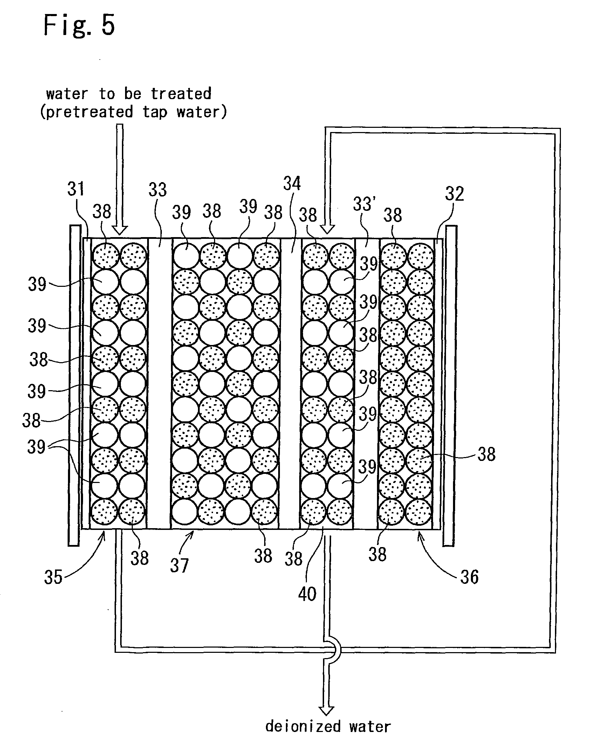

In Fig.5, water to be treated is fed to the concentration-cathode compartment 35, and the water flown out from the compartment 35 is fed to the concentrating compartment 40 in the side of the anode, and the water flown out from the compartment 40 is obtained as deionized warter. When the water to be treated is fed first to the concentration-cathode compartment 35 as shown in Fig.5, there is the following possibility: Mg ions contained in the water to be treated are captured by the ion exchange resins in the concentration-cathode compartment, and the Mg ions may form scales in the compartment 35 when pH in the compartment 35 becomes alkaline side due to operation of the electrodeionization apparatus. On the other hand, in Fig.4, such scale formation is prevented. Namely, pH in the concentration-cathode compartment 35 is neutralized and does not become a pH range where scale is produced, since the water to be treated is not fed directly to the concentration-cathode compartment 35 but is fed first to the concentrating compartment 40 to become acidic and then fed to the concentration-cathode compartment 35. Accordingly, the mode of Fig.4 is more preferable than that of Fig.5.

Pressure loss becomes high and accordingly a load of pump becomes high, when water flows through two compartments in series as above, so that water is preferable to flow through the two compartments only when it is necessary.

Water to be treated is not fed to the desalting compartment 37 so as not to contaminate the ion exchange resins therein.

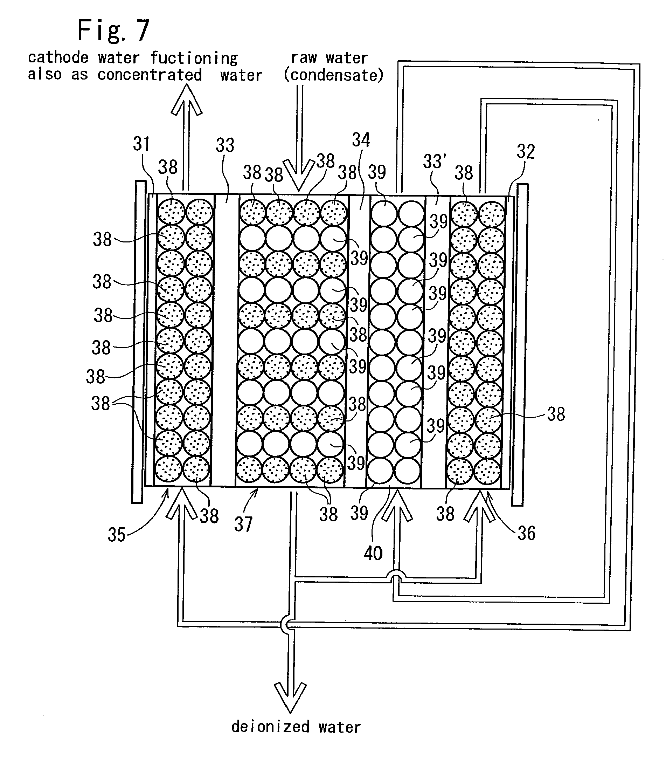

Each of Figs.7-9 is a schematic virtical sectional view showing an electrodeionization apparatus according to another embodiment.

Cation exchange resins 38 are filled in the concentration-cathode compartment 35 and the anode compartment 36. Anion exchange resin 39 is filled in the concentrating compartment 40. Cation exchange resins 38 and anions exchange resins 39 are filled in the desalting compartment in such a manner that they are arranged alternately in the water flow direction and that cation exchange resin is arranged at the uppermost side.

The desalting compartment 37 is provided at its one end with an inlet for raw water and is provided at its other end with an outlet for deionized water.

The anode compartment 36 is provided at its one end with an inlet for raw water or deionized water. Water from the anode compartment 36 is sent to the concentrating compartment 40 through one end thereof and is discharged from the concentrating compartment 40 through the other end thereof. Water from the concentrating compartment 40 is sent to the concentration-cathode compartment 35 through one end thereof and is discharged, as cathode electrode water functioning also as concentrated water, from the concentration-cathode compartment 35 through the other end thereof.

Other constructions are the same as those of the proceeding embodiments, and each of the numerals shows the same part respectively.

Next, the mode of operation of this apparatus is explained.

### <Electrodeionization operating mode>

In one electrodeionization operating mode, as shown in Fig.7, raw water (condensed water)is fed into the desalting compartment 37 while a voltage is applied between the cathode 31 and the anode 32 and is taken out as deionized water. As mentioned above, the deionized water is fed into the anode compartment 36, and the water flown out therefrom flows through the concentrating compartment 40 and the concentration-cathode compartment 35 sequentially. Cations in the raw water permeate the first cation exchange membrane 33 and are discharged in a state mixed with the cathode water.

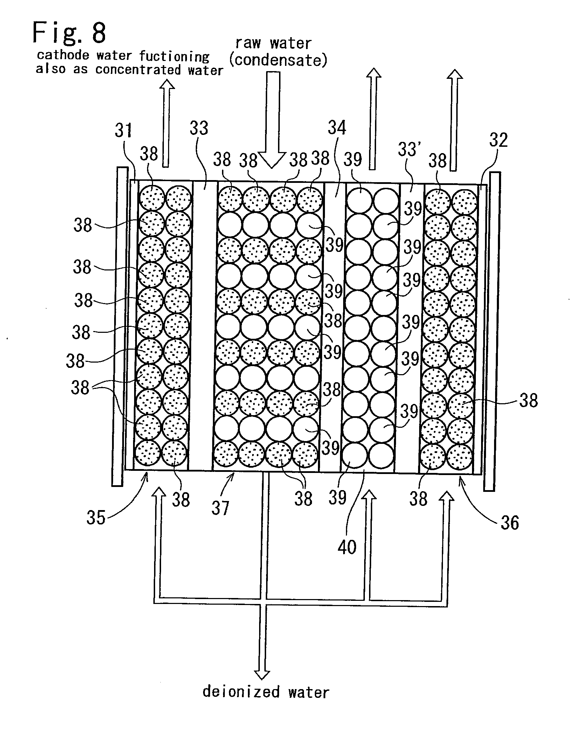

Another water flow mode of electrodeionization operation is illustrated in Fig.8.

In Fig.8, raw water (condensed water) is fed into the desalting compartment 37. Deionized water from the desalting compartment is mainly taken out as deionized product water, and a part of the deionized water is fed into the concentration-cathode compartment 35, the concentrating compartment 40, and the anode compartment 36 respectively.

### <Ion exchange operation mode>

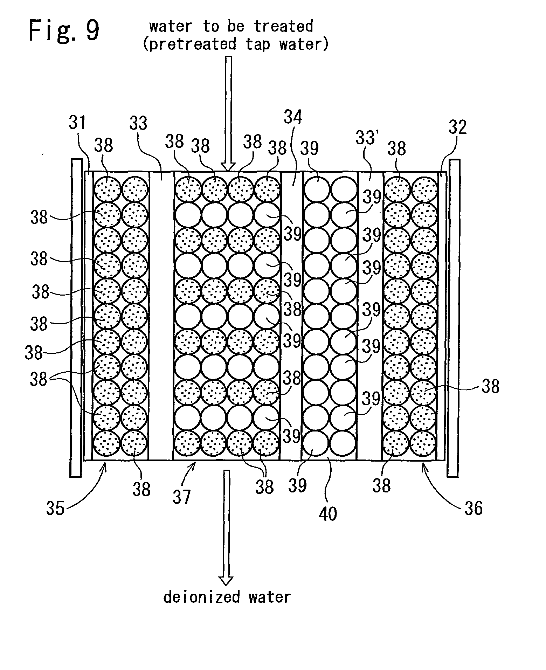

Method for producing deionized water by ion exchange treatment using the electrodeionization apparatus is illustrated in Fig.9. In this mode, an energizing amount is adjusted so that energization may be stopped or current density is equal to or less than 1000 mA/dm², water to be treated is fed to the desalting compartment 37, and the water flown out from the compartment 37 is obtained as deionized water. There is a possibility that scale forming ions condense on the surface of the cathode or the ion exchange membrane, and a scale may unpreferably precipitate on the surface of the cathode or the ion exchange membrane, when current density exceeds 1000 mA/dm². The current density is more preferably equal to or less than 600 mA/dm² for the same reason. Stopping energization is most preferable since it prevents scale formation more certainly and also control of an energizing amount becomes simple.

### <Alternate operation>

After deionized water producing operation by ion exchange is conducted as above, then the mode is returned to operation by electrodeionization. By this, ion exchange resin is regenerated electrically.

When a holding amount of the deionized water in the fuel cell system becomes small during the operation mode of electrodeionization, the mode for ion exchange operation is conducted for supplementing deionized water, and thereafter, the mode is returned to electrodeionization.

### [Utilizing the apparatus as a deionized water supplying system for a fuel cell system]

When the above apparatus is used as a deionized water supplying system for a fuel cell system, it is preferable that the electrodeionization apparatus is operated on a trial in order to regenerate ion exchange resins in each compartment for a real operation of the apparatus before the electrodeionization apparatus is installed in a field.

After the electrodeionization apparatus is installed, the electrodeionization apparatus is operated by letting water flow as shown in Fig.3, 4, 5 or 9 to produce deionized water, and the fuel cell system is started its operation with using the deionized water.

Water to be treated which is supplied to the electrodeionization apparatus at its start of operation is preferably pretreated water of tap water, well water, or industrial water etc. Means for pretreating water is preferably dechlorination treatment and clarifying treatment, more concretely activated carbon treatment and membrane separation treatment such as micro filtration or ultra filtration.

### [Other embodiments]

The above electrodeionization apparatuses consist of four compartments 35, 37, 40, 36, but they may consist of three compartments including a concentration-cathode compartment, a desalting compartment and a concentration-anode compartment. In this case, water to be treated is fed to either one of concentration-cathode compartment and concentration-anode compartment at a deionized water producing mode. Water to be treated may be fed to both concentration-electrode compartments in series. In this case, scale formation in the concentration-cathode compartment is prevented when the water is fed first to the concentration-cathode compartment.

As a treating means of water fed to a boiler, a softner is used for make-up water treatment and a deionization apparatus is used for condensate nowadays. The apparatus of the present invention has functions of both apparatuses. Namely, make-up water can be produced by deionizing tap water with the apparatus of the invention, and condensate can be deionized with the apparatus of the invention during operation of a boiler. The apparatus of the invention can be downsized, salt water feeding to a softner becomes unnecessary, treatment of acidic and alkaline waste water from an electrodeionization apparatus becomes unnecessary, and therefore, the invention contributes to lowering environmental load.

### Examples and Comparative Examples

Examples and Comparative Examples will be explained next.

In Example 1 and Comparative Example 1, the electrodeionization apparatus having a structure consisting of four compartments was employed, and deionized water was produced by electrodeionization with the flow system shown in Fig.2. Deionization of tap water in Example 1 was conducted with the flow system shown in Fig.3.

### [Example 1]

### 1) Start-up of the electrodeionization apparatus

Deionized water having a resistivity of 1MΩ · cm was fed to the desalting compartment at a flow rate of 2.3L/h, and a part of deionized water flowing out from the desalting compartment was obtained as product water at a flow rate of 2L/h.
Remaining 0.3L/h of deionized water was divided equally amoung three parts, and each of them was fed into each of remaining compartments, and each water flown out therefrom was discharged. Direct current of 0.1 A was applied to the electrodes, and water was started to be fed. Start-up was completed when the product water reached at its resistivity to 16MΩ · cm.

### 2) Deionization of tap water (Ion exchange treatment)

Necessary deionization treatment of tap water was conducted by the ion exchange resin filled in the concentrating compartment at the side of the anode.

The tap water was dechlorinated by activated carbon first, clarified by a microfilter, and then fed to the concentrating compartment at the side of the anode at a feeding rate of 0.3L/h. When water flown out from the concentrating compartment at the side of the anode was measured at its resistivity, it was as good as about 3MΩ · cm, and a total of about 1.0L of deionized water was obtained. During deionization of the tap water, current was not applied.

### 3) Simulated deionization of condensate (Electrodeionization treatment)

Simulated water of condensate obtained from a fuel cell was prepared as raw water, and it was deionized by the electrodeionization apparatus which had deionized the tap water at the above step 2). The simulated water was prepared by dissolving sodium chloride and carbon dioxide gas to deionized water so that it had an electric conductivity of about ImS/m.

The simulated water was fed to the desalting compartment and treated therein under the same conditions including applying direct current as those of the above 1) for the start-up. As a result, water having a resistivity of 6MΩ · cm was obtained.

The simulated water was fed continuously for about one week, and deionized water having a good quality was produced during the period.

### 4) Repeat of deionization of the tap water and the simulated water

After the above step 3) for deionization of the simulated water, the step 2) for deionization of the tap water and the step 3) for the simulated water were repeated alternately to the sum of five steps. During repeating the five steps, an amount of deionized water obtained by treating the tap water was reduced gradually, but deionized water of 75% as that obtained at the first step was produced at the fifth step, which was practical.

Reasons why deionized water obtained by deionization of the tap water is inferior in its quality to deionized water obtained by deionization of simulated condensate were thought to be as follows; During deionization of the simulated condensate, the ion exchange resin filled in the desalting compartment is regenerated continuously electrically. On the contrary, the ion exchange resin filled in the concentrating compartment at the side of the anode is contaminated slightly by various anions migrated from the desalting compartment by permeating the anion exchange membrane, so that the ion exchange reisin is relatively low in regeneration efficiency, and accordingly, ion exchange efficiency in deionization of the tap water becomes relatively low.

Deionized water obtained by deionizing the simulated condensate had a good quality of about 6MΩ · cm continuouly, and functions of electrodeionization were good to obtain deionized water continuously.

### [Comparative Example 1]

Mixed ion exchange resins of 40mL which were equal in amount to thouse filled in the concentrating compartment at the side of the anode of the electrodeionization apparatus were packed in a column after regeneration thereof, and measured their deionization efficiency by providing them with tap water and thereafter simulated condensate in an amount equal to that of the Example. As a result, they were broken through during a deionization step of the simulated condensate after a first deionization step of the tap water, and they became impossible to be used.

Example 2 and Comparative Example 2 will be explained next. In Example 2 and Comparative Example 2, the electrodeionization apparatus having a structure consisting of four compartments was employed, and deionized water was produced by electrodeionization with the flow system shown in Fig.8. Deionization of tap water in Example 2 was conducted with the flow system shown in Fig.9.

### [Example 2]

### 1) Start-up of the electrodeionization apparatus

The electrodeionization apparatus was started-up in the same manner as in Example 1.

### 2) Deionization of tap water (Ion exchange treatment)

Necessary deionization treatment of tap water was conducted by the ion exchange resin filled in the desalting compartment.

The tap water was dechlorinated by activated carbon first, clarified by a microfilter, and then fed to the desalting compartment at a feeding rate of 0.3L/h. When water flown out from the desalting compartment was measured at its resistivity, it was as good as about 6MΩ · cm, and a total of about 1.0L of deionized water was obtained. During the deionization of the tap water, current was not applied.

### 3) Simulated deionization of condensate (Electrodeionization treatment)

Simulated water of condensate obtained from a fuel cell was prepared as raw water, and it was deionized by electrodeionization apparatus which had deionized the tap water at the above step 2). The simulated water was prepared by dissolving sodium chloride and carbon dioxide gas to deionized water so that it had an electric conductivity of about ImS/m.

The simulated water was fed to the desalting compartment and treated therein under the same conditions including applying direct current as those of the above 1) for the start-up. As a result, water having a resistivity of 6MΩ · cm was obtained, which was equal to that obtained in deionizing the tap water.

The simulated water was fed continuously for about one week, and deionized water having a good quality was produced during the period.

### 4) Repeat of deionization of the tap water and the simulated water

After the above step 3) for deionization of the simulated water, the step 2) for deionization of the tap water and the step 3) for the simulated water were repeated alternately to the sum of five steps. During repeating the five steps, an amount of deionized water obtained by treating the tap water was reduced gradually, but deionized water of 70% as that obtained at the first step was produced at the fifth step, which was practical.

Deionized water obtained by deionizing the simulated condensate had a good quality of about 6MΩ · cm continuouly, and functions of electrodeionization were good to obtain deionized water continuously.

### [Comparative Example 2]

Mixed ion exchange resins of 20mL which were equal in amount to those filled in the desalting compartment were packed in a column after regeneration thereof, and measured their deionization efficiency by providing them with tap water and thereafter simulated condensate equal in amount to that of the Example. As a result, they were broken through during a deionization step of the simulated condensate after a first deionization step of the tap water, and they became impossible to be used.

While the present invention was described in detail with particular embodiments, it is apparent to person skilled in the art that various modifications can be made without departing from the spirit and the scope of the present invention.
The present application is based on Japanese Patent Application (Japanese Patent Application No. 2006-351564) filed on December 27, 2006 and Japanese Patent Application (Japanese Patent Application No. 2006-351565) filed on December 27, 2006, which were incorporated herein by reference in their entirety.

## Claims

1. A deionized water producing apparatus having an electrodeionization apparatus, said electrodeionization apparatus comprising:
a cathode (31);
an anode (32);
a concentrating compartment (35) at the side of the cathode (31); a desalting compartment (37); and a concentrating compartment (40) at the side of the anode formed between the cathode (31) and the anode (32); and
an ion exchanger filled in each compartment,
said compartments being formed by arranging ion exchange membranes (33, 33') between the cathode (31) and the anode (32);
wherein said electrodeionization apparatus further comprises means for conducting an operation mode for producing deionized water by ion exchange by which water to be treated is fed to at least one of the concentrating compartment and the desalting compartment (37), the water is treated by ion-exchange, and deionized water flows out from the compartment.

2. A deionized water producing apparatus as claimed in claim 1, wherein said means for conducting an operation mode for producing deionized water by ion exchange comprises energization control means for stopping applying current or adjusting a current density to 1000 mA/dm² or less.

3. A deionized water producing apparatus as claimed in claim 1, wherein said electrodeionization apparatus comprises: a first cation exchange membrane (33), an anion exchange membrane (34), and a second cation exchange membrane (33') arranged between the cathode (31) and the anode (32) in this order from the cathode to the anode;
wherein said concentrating compartment at the side of the cathode (31) is a concentration-cathode compartment (35) which is formed between the cathode (31) and the first cation exchange membrane (33);
said desalting compartment (37) is formed between the first cation exchange membrane (33) and the anion exchange membrane (34);
said concentrating compartment at the side of the anode (32) is formed between the anion exchange membrane (34) and the second cation exchange membrane (33'); and
an anode compartment (36) is formed between the second cation exchange membrane (33') and the anode (32).

4. A deionized water producing apparatus as claimed in claim 3, wherein water to be treated is fed to the concentrating compartment between the anion exchange membrane (34) and the second cation exchange membrane (33') at said operation mode for producing deionized water by ion exchange.

5. A deionized water producing apparatus as claimed in claim 3, wherein water to be treated is fed to the concentration-cathode compartment (35), and then the water flown out from the concentration-cathode compartment (35) is fed to the concentrating compartment between the anion exchange membrane (34) and the second cation exchange membrane (33') at said operation mode for producing deionized water by ion exchange.

6. A deionized water producing apparatus as claimed in claim 3, wherein water to be treated is fed to the desalting compartment (37) at said operation mode for producing deionized water by ion exchange.

7. A deionized water producing apparatus as claimed in claim 1, wherein a mixed bed of anion exchange resin (39) and cation exchange resin (38) is filled in the concentrating compartments as an ion exchanger.

8. A deionized water producing apparatus as claimed in claim 1, wherein a cation exchanger and an anion-exchanger are arranged alternately in this order from an upper stream side in said concentrating compartment.

9. A deionized water producing apparatus as claimed in claim 1, wherein a cation exchanger and an anion exchanger are arranged alternately in this order from an upper stream side in said desalting compartment.

10. A method for producing deionized water with using an electrodeionization apparatus comprising:
a cathode (31);
an anode (32);
a concentrating compartment (35) at the side of the cathode (31), a desalting compartment (37),
a concentrating compartment (40) at the side of the anode (32); and
an ion exchanger filled in each compartment,
each of said compartments being formed by arranging ion exchange membranes (33, 34) between the cathode and the anode;
wherein deionized water producing operation by ion exchange is conducted by feeding water to be treated to at least one of said concentrating compartments and desalting compartment (37), bringing the water into contact with the ion exchanger in the compartment, and letting deionized water discharged from the compartment.

11. A method for producing deionized water as claimed in claim 10, wherein said deionized water producing operation by ion exchange is conducted at a state where energization is controlled such that energization is stopped or a current density is 1000 mA/dm² or less.

12. A method for producing deionized water as claimed in claim 10, wherein said water to be treated is obtained by clarifying and then dechlorinating tap water, well water or industrial water.

13. A method for producing deionized water as claimed in claim 10, wherein said electrodeionization apparatus is for deionizing recovered water of a fuel cell system, and
wherein deionized water is produced by ion exchange with using the electrodeionization apparatus and deionized water thus produced is fed to the fuel cell system.
